# EUROPÄISCHE PATENTSCHRIFT

(11) **EP 0 878 525 B1**
(45) Veröffentlichungstag und Bekanntmachung des Hinweises auf die Patenterteilung: **03.09.2003**
(21) Anmeldenummer: 98108213.4
(22) Anmeldetag: 06.05.1998
(51) Int. Cl.: C09J 5/02, B05D 5/10

(54) **Verwendung eines Tuchs getränkt mit Haftvermittler für Klebstoff-Folien**
Use of cloth impregnated with an adhesion improver for adhesive sheets
Utilisation d'un tissu imprégné d'un promoteur d'adhésion pour feuilles adhésives

(30) Priorität: 16.05.1997 DE 19720526; 25.03.1998 DE 19813081
(43) Veröffentlichungstag der Anmeldung: 18.11.1998
(73) Patentinhaber: Tesa AG, 20253 Hamburg (DE)
(72) Erfinder: Zimmermann, Dieter, 21635 Jork (DE); Lühmann, Bernd, Dr., 22844 Norderstedt (DE); Wachtmann, Klaus, Dr., 65510 Idstein (DE)

(56) Entgegenhaltungen:
- EP-A- 0 577 014
- FR-A- 2 732 364
- DATABASE WPI Section Ch, Week 8340 Derwent Publications Ltd., London, GB; Class A81, AN 83-780690 XP002074748 & JP 58 145 776 A (NITTO ELECTRIC IND CO)
- PATENT ABSTRACTS OF JAPAN vol. 096, no. 010, 31. Oktober 1996 & JP 08 165458 A (KANSAI PAINT CO LTD), 25. Juni 1996

## Beschreibung

Die Erfindung betrifft die Verwendung eines Vorreinigungstuchs, getränkt mit einem Haftvermittler, der die Verklebungsfestigkeit insbesondere im Naßzellenbereich zwischen einer Glas- bzw. Keramikoberfläche und einer Klebstoff-Folie verbessert.

### Stand der Technik

Hochelastische Klebstoff-Folien (der Begriff Klebstoff Folie wird im nachfolgenden Text synonym verwendet) für wiederlösbare Verklebungen, die durch Ziehen in Richtung der Verklebungsebene wieder lösbar sind, sind bekannt. Im Handel sind diese unter den Bezeichnungen "tesa Power-Strips" ® und "tesa Poster-Strips" und "tesa Power-Strips Sytem-Haken" ®, ein sogenannter Systemhaken mit Basisplatte und aufsteckbarem Dekorhaken, von der Beiersdorf AG erhältlich. Damit hergestellte Verklebungen bieten kraftvollen Halt und lassen sich dennoch spurlos wieder lösen ohne Beschädigung des Untergrundes oder der Fügeteile, wie dies in **DE 33 31 016 C2** beschrieben ist.

So wird in **DE 37 14 453** ein zerstörungsfrei von Übungsobjekten wieder abnehmbarer Übungssprengkörper beschrieben, der mit solch einer Klebstoff-Folie reversibel befestigt ist.

**DE 42 22 849** beschreibt einen Streifen einer Klebfolie mit einem besonders ausgestaltetem, insbesondere UV-undurchlässigen, Anfasser.

**DE 42 33 872** und **US 5,507,464** beschreiben wiederablösbare selbstklebende Haken, die mit Klebstoff-Folien ausgerüstet sind.

Auch **DE 195 11 288** beschreibt die Verwendung derartiger Klebstoff-Folien für eine Bodenplatte, an der weitere Gegenstände einrastbar befestigt werden können, wobei insbesondere der optisch störende Anfasser abgedeckt wird.

Schließlich werden in **US 4,024,312** hochverstreckbare Klebstoff-Folien beschrieben, die aus einen hochelastischen und dehnbaren Träger auf Basis von Styrolblockcopolymeren und einer Haftklebemasse aufgebaut sind. Die Haftklebemasse besteht entweder aus Polyisopren (z. B. Naturkautschuk) oder aus Synthesekautschuken auf Styrolblockcopolymerbasis in Abmischung mit Klebharzen und ggf. weiteren Abmischkomponenten, wie sie auch für das Trägermaterial eingesetzt werden. Diese Klebebänder können leicht durch Verstreckung parallel zur Verklebungsfläche vom Haftgrund entfernt werden und sind insbesondere geeignet für Anwendungen im medizinischen Bereich, wo ein schmerzloses Abziehen von der Haut erwünscht ist.

So beschreibt **WO 92/11333** ein durch Ziehen in der Verklebungsebene wiederablösbares Klebeband, welches als Träger eine hochverstreckbare, im wesentlichen nicht rückstellende (nicht kautschukelastische) Folie nutzt, die nach Verstreckung <50% Rückstellvermögen aufweist.

**WO 92/11332** beschreibt ein durch Ziehen in der Verklebungsebene wiederablösbares Klebeband, für welches als Träger sowohl eine verstreckbare hoch elastische (kautschukelastische) als auch eine hochverstreckbare, im wesentlichen nicht rückstellende Folie, genutzt werden kann. Als Klebemassen kommen ausschließlich UV-vernetzte Acrylatcopolymere zum Einsatz.

**WO 95/06691** beschreibt durch Ziehen in der Verklebungsebene wiederablösbare Klebebänder, welche als Träger einen geschäumten nicht haftklebrigen Folienträger nutzen.

Klebstoff-Folien vorgenannter Art erlauben somit einen guten Klebverbund und anschließend ein Ablösen durch Dehnen der elastisch oder plastisch verstreckbaren Folie.

Dennoch weisen auch diese Systeme Schwächen auf. So muß die Klebfuge nicht nur Belastungen durch diverse Kräfte standhalten, sondern auch Belastungen durch Temperatur und Feuchtigkeit unbeschadet überstehen. Das Kleben von Klebstoff-Folien stellt besonders im Naßzellenbereich höchste Anforderungen an die Durchführung der Verklebung und an die Klebstoff-Folie.

Eine Möglichkeit, die Verklebungsfestigkeit derartiger Klebverbunde zu erhöhen ist in **DE 19537323** beschrieben. Durch eine entsprechende Befestigungsvorrichtung mit kanalartigen Vertiefungen, durch die eingeschlossene Luft entweichen kann, wird die Herabsetzung der Verklebungsfestigkeit durch Lufteinschlüsse vermieden.

Eine weitere Möglichkeit zur Verbesserung der Verklebungsfestigkeit ist der Einsatz von Haftvermittlern. Die Qualität des Klebverbundes hängt nämlich von der Art des Untergrundes und seiner Oberflächenvorbereitung, von dem kohäsiven Verhatten des Klebstoffes und von den adhäsiven Wechselwirkungen des Klebstoffes mit der zu verklebenden Oberfläche ab. Zur Verbesserung der Adhäsion zwischen Untergrund und Klebstoff-Folie können die Untergründe mit sogenannten Haftvermittlern vorbehandelt werden. Diese reagieren sowohl mit der Fügeteiloberfläche wie auch mit der Klebstoff-Folie und wirken daher als chemische Brücken. Sie sind in der Lage, die Festigkeit von Verklebungen und insbesondere deren Alterungsverhalten gegenüber feuchter Atmosphäre und auch bei Wasserkontakt zu verbessern.

Auf dem Gebiet des Klebens umfaßt ein Hauptvertreter der Haftvermittler die Gruppe der siliziumorganischen Verbindungen (Silane) mit der allgemeinen Formel (RO)₃-Si-(CH₂)ₙ-X. Als RO-Substituent sind u. a. Methoxy- und Ethoxygruppen gebräuchlich, die reaktionsfähige Endgruppe X kann in Abstimmung zur Klebmasse z. B. eine Amino- (NH₂-), Hydroxy- (OH-), Vinyl- (CH₂=CH-), Methacryl- (CH₂=C-CH₃) oder auch EpoxyGruppe sein. Durch die Bifunktionalität des Haftvermittlers bedingt, reagiert der RO-Substituent mit der Fügeteiloberfläche. Mit Spuren von Wasser hydrolysiert der Haftvermittler zu sehr unbeständigen Zwischenverbindungen, polymerisiert teilweise zu Polysilanen und/oder kondensiert über die verbleibenden HO-Si-Gruppen mit den OH-Gruppen eines anorganischen Werkstoffes (wie z. B. Glas oder keramische Werkstoffe).

So sind derartige Haftvermittler z. B. seit langem bei der Herstellung glasfaserverstärkter Kunststoffe im Einsatz, um die Adhäsion zwischen Glasfasern und Matrixharz zu verbessern. Auch in Verbindung mit Selbstklebemassen werden silanhaltige Haftvermittler eingesetzt. Ein Überblick gibt der Aufsatz von U. Deschler et al. in der Angew. Chem. 98 (1986) 237-253.

In der **JP 04173885** "Undercoat compsn. for adhesive sheet - obtd. by mixing silane coupling agent compsn. with isobuthylene polymer" wird ein silanhaltiger Haftvermittler der Klebmasse zugemischt. Dies führt zu einer erhöhten Verklebungsfestigkeit, die einem leichten Wiederablösen entgegensteht.

Die **JP 62282924** "Labelling glass with tacky adhesive film - involves applying silane coupling agent to surface to improve bonding" beschreibt einen silanhaltigen Haftvermittler, der die Verklebungsfestigkeit von Selbstklebebändern zu Glas bzw. Keramik verbessert. Er wird direkt auf den Untergrund aufgebracht und reagiert mit diesem und mit der Klebmasse des Selbstklebefilms unter Bildung von chemischen Bindungen. Dies führt neben einer verbesserten Wasserresistenz der Klebeverbindung zu einer gesteigerten Verklebungsfestigkeit, die sich aber auch in einem erschwerten Wiederlösen des Klebeverbundes äußert.

Auch **JP 08165458** "Application of pressure sensitive adhesive film - includes precoating inorganic substrate with silane coupling agent for excellent adhesion and water resistance" beschreibt einen silanhaltigen Haftvermittler, der durch Auftragen auf anorganische Oberflächen eine bessere Haftung zu Selbstklebefilmen bietet. Das Verhalten des Klebverbundes ist vergleichbar der JP 62282924.

Die Verwendung eines geeigneten Haftvermittlers führt für die in den vorgenannten Schriften beschriebenen Systemen bedingt durch die chemische Anbindung dieses Haftvermittlers an die Haftklebemasse und an die Fügeteiloberfläche somit zu einer starken Steigerung der Verklebungsfestigkeit des Klebverbundes und erschwert damit folglich das Lösen der Klebverbundes. Ein rückstands- und zerstörungsfreies Wiederablösen der erhaltenen Klebbindungen wird hierdurch erschwert, wenn nicht unmöglich gemacht.

Aufgabe der Erfindung war es, eine Problemlösung zur Verfügung zu stellen, die einerseits eine hervorragende Adhäsion der Klebstoff-Folien in trockener und in feuchter bzw. nasser Umgebung zu z. B. Glas- und Keramikoberflächen gewährleistet, andererseits jedoch gleichzeitig keine Verschlechterung der leichten und rückstandsfreien Lösbarkeit, d. h. Trennung der Klebstoff-Folie durch Verstreckung, bewirkt.

Gelöst wird diese Aufgabe durch Verwendung eines silanhaltigen Haftvermittlers, wie dies in den Ansprüchen näher beschrieben ist, welcher in an sich bekannter Weise mit Glas- und Keramikoberflächen reagiert, jedoch im wesentlichen keine chemische Reaktion mit den eingesetzten Klebstoff-Folien eingeht.

Resultierende Klebverbunde weisen überraschenderweise eine hervorragende Verklebungsfestigkeit in trockener Umgebung, jedoch ebenfalls in feuchter und nasser Umgebung auf, ohne das Ablöseverhalten der Klebstoff-Folien zu verschlechtern, d. h. die Ablösekräfte zu erhöhen.

### Detailbeschreibung

### Rezeptur

Als Haftvermittler sind diverse funktionalisierte Silane der allgemeinen Formel X-(CH₂)ₙ-Si(OR)₃ im Handel erhältlich und erfindungsgemäß geeignet.

Besonders gebräuchlich sind dabei Trimethoxy-silane der allgemeinen Formel X-(CH₂)ₙ-Si(OCH₃)₃ und Triethoxy-silane der allgemeinen Formel X-(CH₂)ₙ-Si(O-CH₂-CH₃)₃. Dabei gilt im allgemeinen, daß die Methoxy-Verbindungen deutlich toxischer als vergleichbare Ethoxyverbindungen sein sollen. Dies führt zu einer Präferierung der Triethoxy-silane.

Die Kohlenstoffkette -(CH₂)ₙ- dieser Organosilane X-(CH₂)ₙ-Si(OR)₃ kann von unterschiedlicher Länge sein, üblich sind für n Werte von n = 0, 1, 2, 3. Die Verbindungen mit n = 0 besitzen demnach die Formel X-Si(OR)₃ und eine relativ geringe Molmasse, was zu einer recht hohen Flüchtigkeit führt. Wie auch Verbindungen mit n = 1 sind diese Verbindungen somit flüchtiger als vergleichbare Verbindungen mit n = 2 oder n = 3. Der Einsatz von n = 2 führt zu Verbindungen wie z. B. das im Handel erhältliche beta-(3, 4-Ethoxycyclohexyl)-ethyl-triethoxy-silan. Mit n = 3 erhält man Verbindungen der allgemeinen Formel X-(CH₂)₃-Si(OR)₃ wie z. B. die im Handel erhältlichen Organosilane gamma-Mercapto-propyl-triethoxy-silan mit der Formel HS-(CH₂)ₙ-Si(O-CH₂-CH₃)₃ und gamma-Amino-propyl-triethoxy-silan mit der Formel NH₂-(CH₂)ₙ-Si(O-CH₂-CH₃)₃. Letztere wird im großtechnischen Maßstab hergestellt und besitzt eine recht kleine Flüchtigkeit.

Der Si-haltige Teil des Haftvermittlers bindet sich an die anorganische Oberfläche, hingegen der reaktive Rest X an die Klebmasse. Daher sollte dieser Rest X vorteilhaft auf die Klebmasse abgestimmt werden. Verfügbar im Handel sind Organosilanen mit unterschiedlichen Resten X. Mit X = CH₂=CH- ergeben sich Vinylverbindungen wie z. B. das gamma-Glycidyloxy-propyl-trimethoxy-silan. Auch Reste X = -CN und X = Halogenid sind im Einsatz, so wird 3-Chlor-propyl-trialkoxy-silan als Haftvermittler in glasfaserverstärkten Kunststoffen eingesetzt. Jedoch führen Organosilane mit Cyanidund Halogenid-Gruppen meist zu starken Haut- und Schleimhautreizungen. Femer sind Organosilane mit einem Amino-Rest (X = NH₂-) bekannt. Hier sind insbesondere die beiden im Handel erhältlichen Verbindungen gamma-Amino-propyl-trimethoxy-silan NH₂-(CH₂)₃-Si(OCH₃) und gamma-Amino-propyl-triethoxy-silan NH₂-(CH₂)₃-Si(OCH₃) zu nennen. Wie Versuche zeigten, sind diese Amino-funktionalisierten Organosilane sehr gute Haftvermittler zwischen einer anorganischen Oberfläche und einer Klebmasse auf Synthesekautschuk-Basis wie z. B. die tesa Power-Strips.

Zusammenfassend ist festzustellen, daß sich das Organosilan gamma-Amino-propyl-triethoxy-silan NH₂-(CH₂)₃-Si(OCH₃) hervorragend als Haftvermittler zwischen einer anorganischen Oberfläche wie einer Kachel oder auch Glas und einer Klebstoff-Folie wie der tesa Power-Strip eignet. Demgemäß wurde ein neuer Haftvermittler für die Verklebung von Klebstoff-Folien wie tesa Power-Strips auf anorganische Untergründe gefunden.

Die Anwendung dieses Haftvermittlers in reiner Form erscheint nicht sinnvoll. Zum einen wird nur eine dünne Schicht dieses Haftvermittlers zwischen Fügeteil und Klebstoff-Folie benötigt, zum anderen ist in konzentrierter Form das Gefahrenpotential und die Hydrolyseempfindlichkeit deutlich höher.

Daher wird das Organosilan in ein Lösungsmittel bzw. Lösungsmittelgemisch eingebracht. Dabei sollte die Konzentration des Organosilans zwischen ca. 0,1 und ca. 3 Gew-% liegen. Das Lösungsmittelgemisch besteht bevorzugt zu 70-95 % Gew-% aus einer hydrophoben Komponente wie z. B. Toluol oder Ethylacetat und zu 30-5 % aus einer hydrophilen Komponente wie z. B. Ethanol oder Propanol. Dabei erscheint aufgrund der toxischen Wirkung des Toluols das Ethylacetat besser geeignet; weiterhin wird das Isopropanol dem Ethanol der Vorzug gegeben. Femer ist zu bemerken, daß dieses Gemisch gleichzeitig beim Abwischen das Fügeteil reinigt und entfettet.

Präferiert wird somit insbesondere eine Rezeptur bestehend aus 88 % Ethylacetat, 11,5 % Isopropanol und 0,5 % gamma-Amino-propyl-triethoxy-silan. Dieses Organosilan z. B. ist unter dem Handelsnamen SILQUEST^{R} A1102 bei der Firma OSI, Belgien käuflich zu erwerben.

Geeignet ist der Haftvermittler insbesondere für Klebemassen auf Basis von Synthesekautschuk wie in DEP 3331016, 4222849, 4339604 und 19626870 beschrieben, aber auch für Klebemassen auf Naturkautschukbasis wie in US 4 024 312 aufgeführt als auch solche auf Basis von Butylkautschuk, Polyisobutylen und α-Olefincopolymeren sowie Gemischen vorgenannter Verbindungen.

### Darreichungsform

Für den Consumer ist die Darreichungsform von entscheidender Bedeutung. Neben dem Abfüllen in Flaschen und Dosen wird ein Darreichung in Siegelrandbeuteln bevorzugt.

Dieser Siegelrandbeutel besteht aus einer lösungsmittel- und wasserundurchlässigen Folie, da weder das Lösungsmittelgemisch entweichen soll, noch Wasser eindringen kann, was zur Hydrolyse des Organosilans führen würde. Dies wird z. B. durch den Einsatz einer PE/AL/PTPE-Folie gewährleistet. In dem Siegelrandbeutel befindet sich ein Kunststoffvlies, getränkt mit der erfindungsgemäßen Rezeptur. Der 6 x 10 cm große Siegelrandbeutel wird durch Auseinanderziehen der beiden Folienseiten geöffnet, so daß der Anwender mit dem Vlies, das mit der Rezeptur getränkt ist, kein Hautkontakt hat.

Zur deutlichen Verbesserung der Lagerstabilität der Rezeptur muß eine vorzeitige Hydrolyse verhindert werden. Daher wird die Haftvermittler-Rezeptur mit Molekularsieb getrocknet. Dabei werden 5 Gew-% Molekularsieb auf die gesamte Flüssigkeitsmenge gegeben. Vorzugsweise wird erst das Lösungsmittelgemisch getrocknet und dann das Organosilan hinzugefügt. Als Molekularsieb wurde das Trockenmittel Wessalith MS 330, das bei der Degussa erhältlich ist, eingesetzt. Die Partikelgröße dieses verwendeten Molekularsiebes beträgt bevorzugt 0,5-0,9 mm. Femer wird in den Siegelrandbeutel etwas Molekularsieb eingebracht.

### Ergebnis

Die Anwendung dieser Haftvermittlerrezeptur führt zu einer deutlichen Verbesserung der Adhäsion besonders im Naßbereich. Bemerkenswert ist, daß durch die Anwendung dieser Haftvermittlerrezeptur das Ablösen der Klebeverbindung durch Verstrecken nicht erschwert wird; das Lösen einer Klebstoff-Folie durch Ziehen der Klebstoff-Folie in Richtung der Verklebungsfläche von einer mit dieser Rezeptur behandelten Fügeteiloberfläche erfordert dieselbe Kraft, wie das Lösen der Klebstoff-Folie von einer nicht mit Haftvermittler oder nur mit Lösungsmittel behandelten Oberfläche.

### Prüfmethoden

### Kippscherfestigkeit:

Zur Bestimmung der Kippscherfestigkeit wird die Oberfläche mit dem Primer behandelt und eine definierte Zeit gewartet. Dann wird ein Standard tesa Power-Strip der Abmessung 20 mm * 50 mm, welcher an einem Ende beidseitig mit einem nicht haftklebrigen Anfasserbereich versehen ist, auf diese Oberfläche verklebt und eine definierte Zeit gewartet.

Nun wird die offene Klebeseite mit einer Basisplatte aus Polystyrol verklebt. Auf diese wird ein Stahlhaken mit einem 10 cm langen Stahlstift, welcher vertikal auf der Plattenfläche sitzt, aufgesetzt.

Nach Beaufschlagung der gewählten Kippscherbelastung durch Anhängen eines Gewichtes (Hebelarm und Masse des Gewichtes wählbar) wird die Zeit bis zum Versagen der Verklebung ermittelt.

### Ablösekraft (Stripkraft):

Zur Ermittlung des Ablöseverhaltens wird ein tesa Power-Strip auf einer Kachel verklebt und anschließend 16 h bei 40 °C im Klimaraum gelagert.

Mit einer Zuggeschwindigkeit von 1000 mm/min wird der Klebstoff-Folienstreifen parallel zur Verklebungsebene abgezogen. Dabei wird die erforderliche Ablösekraft (Stripkraft) in N/cm gemessen und die Kachel auf Klebmasserückstände überprüft.

### Beispiel 1

Es wurde ein Gemisch gemäß der oben beschriebenen Zusammensetzung aus dem Organosilan gamma-Aminopropyltriethoxysilan (0,5 Gew-%) und den Lösungsmitteln Isopropanol (11,5 Gew-%) und Ethylacetat (88,0 Gew-%) hergestellt. Zur Verhinderung der Hydrolyse wird wie oben beschrieben 5 Gew-% des Molekularsiebes WESSALITH MS 300 von der Degussa auf die Gesamt-Flüssigkeitsmenge zugegeben. Dieses Gemisch wurde in einer Flasche luftdicht aufbewahrt.

Es wurden die drei Prüfuntergründe glatte Kacheln, rauhe Kacheln (Hersteller beider Kachelarten: Fa. Villeroy & Boch) und Glas gewählt. Diese werden mit der Haftvermittlerrezeptur behandelt, d. h. gründlich 3 mal mit dem mit dem getränkten Tuch abgewischt. Dieser Vorgang dauert ca. 0,5-1 Minute.

Anschließend wird eine Zeit t₀ gewartet, bis ein tesa Power-Strip auf die mit Haftvermittler behandelte Oberfläche aufgebracht wird. Im direkten Anschluß daran wird die Basisplatte aufgesetzt und der Haken aufgesetzt. Nun wird die unbelastete Verbindung in den Klimaschrank bei 40 °C und 100 % r. F. gebracht. Nach einer Zeit t₁ wird der Haken bei 9 cm Hebelarm mit 10 N bzw. 20 N belastet. Es wird die Haltezeit in Abhängigkeit der Wartezeiten t₀ und t₁ bestimmt. Ferner wird die Art des Bruches untersucht; am Ende wird, wenn möglich, der Strip abgestrippt. Zum Vergleich wurde eine nicht mit der Haftvermittlerrezeptur, sondern nur mit dem Lösungsmittelgemisch, behandelter Untergrund mit einbezogen.

Ein auf einem ungeprimerten Prüfuntergrund verklebter tesa Power-Strip fällt unter den gewählten Versuchsbedingungen innerhalb weniger Stunden ab; die Ergebnisse streuen zwischen 0 und maximal 5 Stunden.

Die mit der Haftvermittlerrezeptur vorbehandelten Untergründe hingegen zeigten deutlich höhere Haltezeiten. Bei ausreichender Wartezeit hielten die Klebeverbindungen mehrere Wochen. Eine Übersicht über die Ergebnisse zeigt die nachstehende Tabelle.

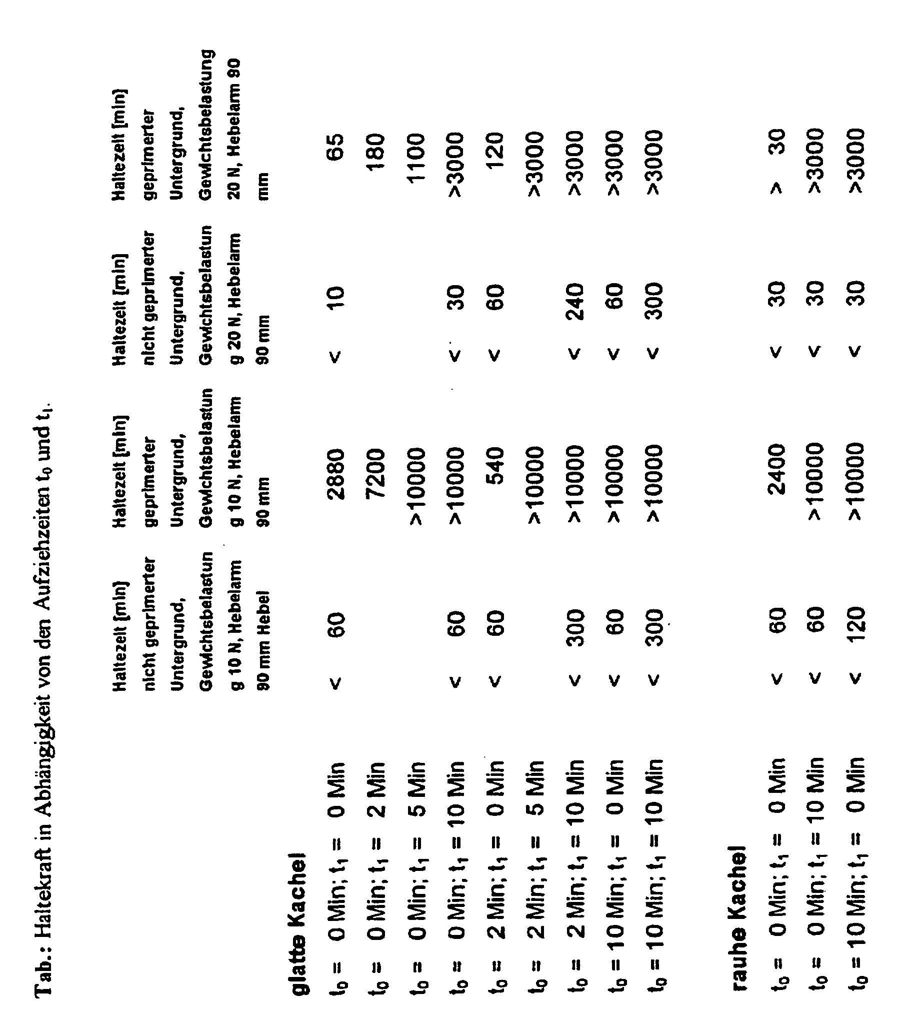

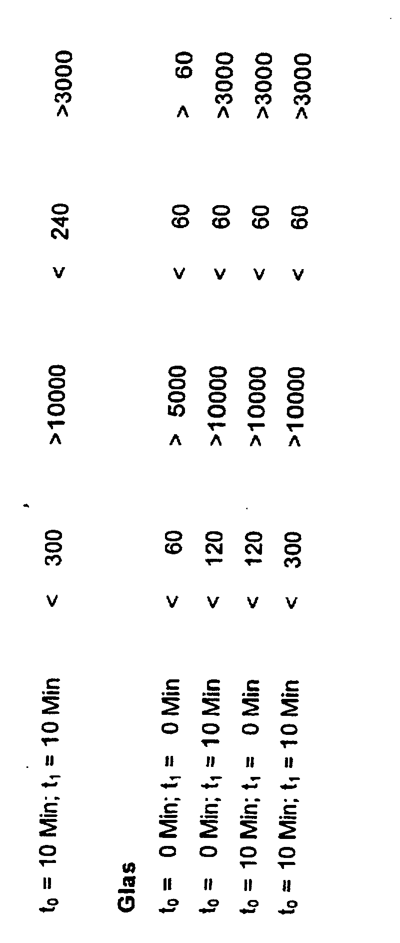

Wie die Laborversuche zeigen, führt die Verwendung der Haftvermittlerrezeptur zu einer deutlich verbesserten Verklebungsfestigkeit. Die Wartezeit t₁ (Zeit nach Verkleben des Strips auf die Kachel bis zum Belasten der Klebeverbindung) sollte vorteilhafterweise wenigstens 5 Minuten betragen, aber auch ohne Wartezeit (t₁ = 0) werden verbesserte Werte erhalten.

Alle Strips lösten sich von der Basisplatte und klebten noch auf der Kachel; somit ist die Schwachstelle eindeutig die Verbindung tesa Power-Strips - Basisplatte. Die Aufziehzeit t₁ wird somit benötigt, damit der tesa Power-Strip auf der Basisplatte auffließen kann.

Alle Power-Strips waren gut stripbar von der Kachel. Masserückstände auf der Kachel wurden nicht beobachtet. Femer wurde die Stripkraft, die zum Abstrippen eines Power-Strips von der Kachel benötigt wird, bestimmt. Bei einer nur mit Wasser gereinigten Kachel wurde sie zu 6,5(2) N/cm, bei einer mit Lösungsmittelgemisch behandelten zu 6,4(2) N/cm und bei einer mit der Haftvermittlerrezeptur behandelten Kachel zu 6,6(1) und 6,2(3) N/cm bestimmt. Somit bleibt die Stripkraft bei Verwendung des Haftvermittlers gegenüber einer nur mit Wasser bzw. Lösungmittelgemisch behandelten Kachel nahezu gleich, jedoch ist die Haltekraft gerade bei Wassereinwirkung deutlich erhöht: höhere Halteleistung insbesondere bei Wassereinwirkung aber gleiche Kraft beim Ablösen.

### Beispiel 2

Die in Beispiel 1 hergestellte Haftvermittlerrezeptur wurde in Siegelrandbeutel, wie oben beschrieben, verpackt. Diese bestehen aus einem verschweißten Alubeutel mit eingeklebten Vlies sowie einige Kömer Molekularsieb. In jeden Beutel wurden 0,58 g Haftvermittler-Flüssigkeit und 0,5 g Molekularsieb zur Verhinderung einer schnellen Hydrolyse des Organosilans gegeben.

Es wurden mehrere Kacheln mit dem Haftvermittler-Tuch bestrichen und die Haltezeit einer Klebeverbindung mit dem tesa Power-Strip analog Beispiel 1 bestimmt. Die Resultate gleichen denen in Beispiel 1.

## Patentansprüche

1. Verwendung eines Vorreinigungstuches für eine Verklebung mittels einer durch Ziehen in Richtung der Verklebungsebene beschädigungslos wieder lösbaren Klebfolie mit einer Klebmasse auf Basis von Polymeren und/oder Copolymeren aus Synthesekautschuk und/oder Naturkautschuk, **dadurch gekennzeichnet, daß** der zu beklebende Untergrund mit einem solchen Vorreinigungstuch abgerieben wird, das mit einem mit Feuchtigkeit reagierenden Organosilan getränkt ist, wobei das Organosilan in einem Lösungsmittel bzw. Lösungsmittelgemisch gelöst ist und darin in einer Konzentration von 0,1 - 3 Gew.-% vorliegt, worauf nach einigen Minuten Wartezeit die Klebfolie auf die behandelte Stelle gedrückt wird, und dann auf die andere Seite der Klebfolie ein Gegenstand, Haken oder dergleichen geklebt wird, oder aber daß nach einigen Minuten Wartezeit die Klebfolie auf die behandelte Stelle gedrückt wird, wobei sich auf der Rückseite der Klebfolie bereits ein Gegenstand, Haken oder dergleichen angeklebt befindet.

2. Verwendung nach Anspruch 1, **dadurch gekennzeichnet, daß** das Organosilan in einer verschlossenen Verpackung, insbesondere einem Siegelbeutel mit Aufreißlaschen vorliegt, in dem es insbesondere in Gegenwart von Molekularsieb unter Ausschluß von Luftfeuchtigkeit verpackt und gelagert wird und erst kurz vor seiner Verwendung durch Auseinanderziehen der beiden Folienlaschen geöffnet wird.

3. Verwendung nach Anspruch 1, **dadurch gekennzeichnet, daß** die Klebfolie eine solche ist, die einen beidseits mit Klebmasse beschichteten dehnbaren und/oder geschäumten Träger aufweist oder gänzlich aus Klebmasse besteht, deren Adhäsion geringer als die Kohäsion ist, wobei das Haftvermögen beim Dehnen weitgehend verschwindet und das Verhältnis von Abzugskraft zu Reißlast mindestens 1 : 1,5 ist.

4. Verwendung nach Anspruch 1, **dadurch gekennzeichnet, daß** das Organosilan ein Alkoxysilan ist, insbesondere ein Ethoxysilan ist.

5. Verwendung nach Anspruch 1, **dadurch gekennzeichnet, daß** das Organosilan ein Triethoxysilan ist, insbesondere Gamma-amino-propyl-triethoxysilan ist.

6. Verwendung nach Anspruch 1, **dadurch gekennzeichnet, daß** das Organosilan in einem Alkohol oder Ester oder Mischungen davon gelöst ist, insbesondere in einer Mischung aus Ethylacetat und Isopropanol.

7. Verwendung nach Anspruch 1, **dadurch gekennzeichnet, daß** das Organosilan in einem mit ihm getränkten Kunststoffvlies als Tuch vorliegt.

## Claims

1. Use of a prior-cleaning cloth for an adhesive bond brought about by means of an adhesive film which is rereleasable without damage by pulling in the direction of the bond plane and which has an adhesive composition based on polymers and/or copolymers of synthetic rubber and/or natural rubber, **characterized in that** the substrate to be bonded is rubbed with a prior-cleaning cloth of this kind which is impregnated with a moisture-reactive organosilane, the organosilane being dissolved in a solvent or solvent mixture and being present therein in a concentration of 0.1 - 3% by weight, whereupon, following a waiting time of a few minutes, the adhesive film is pressed onto the treated area and then an article, hook or the like is bonded to the other side of the adhesive film, or else **in that**, after a waiting time of a few minutes, the adhesive film is pressed onto the treated area, an article, hook or the like already being located in bonded-on form on the reverse of the adhesive film.

2. Use according to Claim 1, **characterized in that** the organosilane is in a sealed pack, especially a sealed closure pouch with tear-open tabs, in which it is packaged and stored, in particular, in the presence of molecular sieve and in the absence of atmospheric humidity, and only shortly before its use it is opened by pulling apart the two film tabs.

3. Use according to Claim 1, **characterized in that** the adhesive film is one which has an extensible and/or foamed backing coated on both sides with adhesive composition or which consists entirely of adhesive composition and whose adhesion is lower than the cohesion, the adhesiveness largely disappearing on extension and the ratio of stripping force to tearing load being at least 1:1.5.

4. Use according to Claim 1, **characterized in that** the organosilane is an alkoxysilane, especially an ethoxysilane.

5. Use according to Claim 1, **characterized in that** the organosilane is a triethoxysilane, especially gamma-aminopropyltriethoxysilane.

6. Use according to Claim 1, **characterized in that** the organosilane is in solution in an alcohol or ester or mixtures thereof, especially in a mixture of ethyl acetate and isopropanol.

7. Use according to Claim 1, **characterized in that** the organosilane is present in a polymer nonwoven which has been impregnated with it, as a cloth.

## Revendications

1. Utilisation d'un chiffon de prénettoyage pour un collage au moyen d'une pellicule d'adhésif redétachable sans dommage par tirage dans le sens du plan de collage, comportant une matière adhésive à base de polymères et/ou copolymères en caoutchouc synthétique et/ou caoutchouc naturel, **caractérisée en ce que** le support à coller est frotté avec un tel chiffon de prénettoyage qui est imprégné avec un organosilane réagissant avec l'humidité, l'organosilane étant dissous dans un solvant ou mélange de solvants et étant présent dans celui-ci à une concentration de 0,1-3 % en poids, à la suite de quoi, après un temps d'attente de quelques minutes, la pellicule d'adhésif est pressée sur le point traité, et un objet, une languette ou similaire est ensuite collé sur l'autre face de la pellicule d'adhésif, ou bien **en ce que**, après un temps d'attente de quelques minutes, la pellicule d'adhésif est pressée sur la face traitée, un objet, une languette ou similaire se trouvant déjà collé sur l'envers de la pellicule d'adhésif.

2. Utilisation selon la revendication 1, **caractérisée en ce que** l'organosilane est présent dans un emballage fermé, en particulier un sachet scellé à pattes d'ouverture, dans lequel il est emballé et stocké en particulier en présence de tamis moléculaire, à l'abri de l'humidité de l'air, et n'est ouvert que peu de temps avant son emploi, par séparation des deux pattes de pellicule.

3. Utilisation selon la revendication 1, **caractérisée en. ce que** la pellicule d'adhésif est une pellicule qui présente un support expansé et/ou étirable revêtu des deux côtés d'une matière adhésive ou consiste en totalité en matière adhésive, dont l'adhérence est plus faible que la cohésion, le pouvoir d'adhérence disparaissant dans une large mesure lors de l'étirage et le rapport de la force de détachement à la charge de rupture étant d'au moins 1:1,5.

4. Utilisation selon la revendication 1, **caractérisée en ce que** l'organosilane est un alcoxysilane, en particulier un éthoxysilane.

5. Utilisation selon la revendication 1, **caractérisée en ce que** l'organosilane est un triéthoxysilane, en particulier le γ-aminopropyltriéthoxysilane.

6. Utilisation selon la revendication 1, **caractérisée en ce que** l'organosilane est dissous dans un alcool ou un ester ou des mélanges de ceux-ci, en particulier dans un mélange d'acétate d'éthyle et d'isopropanol.

7. Utilisation selon la revendication 1, **caractérisée en ce que** l'organosilane est présent dans un non-tissé de matière plastique sous forme de chiffon, imprégné avec celui-ci.
